# EUROPEAN PATENT APPLICATION

(11) **EP 4 131 202 A1**
(43) Date of publication of application: **08.02.2023**
(21) Application number: 21780206.5
(22) Date of filing: 11.03.2021
(51) Int. Cl.: G08G 1/00, G08G 1/09, G08G 1/16, B60W 60/00

(54) **DRIVING MODE SWITCHING ASSIST SYSTEM**

(30) Priority: 31.03.2020 JP 2020062323
(71) Applicant: Land Business Co., Ltd., Chiyoda-ku, Tokyo 100-6030 (JP)
(72) Inventor: KAMEI Masamichi, Tokyo 153-0062 (JP)
(74) Representative: TBK
(86) International application number: PCT/JP2021/009812
(87) International publication number: WO 2021/200015

(57) **Abstract**

This driving mode switching assist system, which can safely and reliably carry out switching from an automatic driving mode to a manual driving mode with comparatively simply system configuration, sets up multiple driving mode switching spaces SS for switching from automatic driving to manual driving along a highway HW or other road where automatic driving travel is possible; configures, on the basis of the position of a selected driving mode switching space SS, an automatic driving segment AD traveled in automatic driving mode with a driving segment configuration means; and after guiding the vehicle in the automatic driving mode from the automatic driving segment AD to the driving mode switching space SS and stopping the vehicle, compulsorily maintains the travel stop state of the vehicle with a travel stop state maintaining means for a prescribed stopping time. The driver rests in the driving mode switching space SS and then, after the stopping time has elapsed, can travel towards the destination with automatic driving.

## Description

### TECHNICAL FIELD

This invention relates to a driving mode switching assist system for avoiding the risk caused by abrupt switching to a manual driving mode when a driver is in the condition of being not sufficiently adaptable to manual driving at the time of switching to manual driving after long distance traveling with automatic driving, for instance.

### BACKGROUND ARTS

Improved automatic driving technologies have enabled approaching to practical applications of automatic driving from Level 3 to Level 4 as defined by the SAE (Society of Automotive Engineers). Level 3 of automatic driving indicates that all driving tasks are to be performed by a system, provided that a driver is required to appropriately respond to an intervention request or the like from the system, and it is believed that comparatively early implementation of automatic driving at Level 3 to traveling on highways would be realized. Level 4 of automatic driving indicates that all driving tasks are to be performed by a system under certain conditions, and Level 5 of fully automatic driving indicates that all driving tasks are to be performed by a system at all times.

In regards to automatic driving at least at Level 3 and Level 4, such automatic driving is based on the premise of switching between automatic driving and manual driving, in which case, however, consideration ought to be given to the risk caused by switching to a manual driving mode when a driver is in the condition of being not sufficiently adaptable to manual driving at the time of switching from automatic driving to manual driving in particular, and in view of the above circumstances, many patent applications concerning the technology for switching from automatic diving to manual driving have been filed.

For instance, as one automatic vehicle driving device which enables smooth transitioning from automatic driving to manual driving, a patent document 1 below discloses an automatic vehicle driving device that comprises a taking-over point setting means which sets a taking-over point for starting taking-over of driving from automatic driving to manual driving in an automatic driving segment, a stopping permitted area setting means which sets a stopping permitted area for evacuation of a driver's own vehicle that is traveling with automatic driving in an automatic driving segment, and an automatic driving control means which controls the driver's own vehicle so as to allow for automatic traveling on the assumption that the stopping permitted area set by the stopping permitted area setting means shall be the destination of traveling with automatic driving, wherein the taking-over point setting means is configured so as to set the taking-over point on this side of the stopping permitted area in the automatic driving segment.

As one automatic driving support device which is capable of providing appropriate support at the time of switching from automatic driving to manual driving in accordance with the situation of a driver, such as a time required until recovery to manual driving becomes enabled, a patent document 2 below discloses an automatic driving support device that comprises a driver monitoring part which monitors the state of a driver of a vehicle, and a manual driving recovery level setting part which performs setting of staged levels showing whether or not to be a state of being capable of switching from automatic driving to manual driving in a prescribed switching segment, based on the driver's state detected in the driver monitoring part.

As one driving support system which allows a driver to carry out taking-over of driving after waiting until manual driving becomes enabled, provided that a vehicle is made to evacuate reliably to an evacuation place when switching from automatic switching to manual switching could not be carried out, a patent document 3 below discloses a driving support device which is configured such that the driving support device serving as an onboard system sets vehicle travel route information, then controls a plurality of vehicle traveling-related function parts to allow for traveling of the vehicle with automatic driving based on the travel route information, then reserves an evacuation place located on this side of a boundary between an automatic driving segment and a manual driving segment in a travel route indicated by the travel route information, then detects the state of the driver of the vehicle, and then determines whether or not the driver is capable of manual driving, based on the state of the driver on this side of the boundary between the automatic driving segment and the manual driving segment, thereby guiding the vehicle for evacuation to the reserved evacuation place when the result of determination on this side of the boundary between the automatic driving segment and the manual driving segment is that the driver is incapable of manual driving.

A patent document 4 below discloses a system that comprises a data processing part which is to achieve a predefined Requested Recovery Ratio (RRR) of recovery from automatic driving to manual driving by the processing of computing a manual driving recovery-enabled time required for a driver under execution of automatic driving and then determining the notice timing of a manual driving recovery request notice on the basis of the computed time, wherein the data processing part is configured so as to, after acquiring the Requested Recovery Ratio (RRR) which is set per road segment and as attached information of Local Dynamic Map (LDM), compute a manual driving recovery-enabled time per scheduled traveling road segment by making use of learning data per driver.

As one device which enables driving mode switching from a manual driving mode to an automatic driving mode reliably and smoothly, and is also capable of terminating automatic driving in safety, a patent document 5 below discloses an automatic driving control device that comprises a position detection unit which detects the position of a traveling vehicle, a driving mode switching unit which performs switching between automatic driving travel and driver's operation-based manual driving travel, an automatic driving controller which performs driving control of the vehicle, and an actuator which controls the speed and steering angle of the vehicle, wherein the automatic driving control device has an override detection unit for detecting override, and automatic driving control of the traveling vehicle is to be performed on the basis of the result of detection by the override detection unit.

As one automatic driving support system which gives a user an opportunity for switching from automatic driving to user's operation-based manual driving, a patent document 6 below discloses an automatic driving support system which is configured so as to perform guidance for promoting switching from automatic driving to user's operation-based manual driving by the processing of acquiring a recommended switching point for switching from automatic driving to user's operation-based manual driving as to a road on which the vehicle travels, while acquiring a scheduled vehicle travel route including an automatic driving segment where automatic driving control of the vehicle is to be performed, and then displaying the acquired recommended switching point on a map image.

### PRIOR ART DOCUMENTS

### PATENT DOCUMENTS

Patent document 1: Japanese Patent Publication No. 4985103
Patent document 2: Japanese Patent Publication No. 6641916
Patent document 3: Japanese Unexamined Patent Application Publication No. 2018-181120
Patent document 4: International Publication No. 2019-202881
Patent document 5: Japanese Unexamined Patent Application Publication No. 2000-276690
Patent document 6: Japanese Unexamined Patent Application Publication No. 2017-165411

### SUMMARY OF THE INVENTION

### PROBLEMS TO BE SOLVED BY THE INVENTION

The invention as disclosed in the patent document 1 is such that switching from automatic driving to manual driving is basically to be carried out during traveling, wherein the vehicle is guided with automatic driving to the stopping permitted area having been set in a location ahead of the taking-over point, when the driver is still asleep at the point of time of arriving at the prescribed taking-over point or when the result of determination by a taking-over determination means is that taking-over of driving from automatic driving to manual driving is not enabled.

The invention as disclosed in the patent document 2 is also such that switching from automatic driving to manual driving is basically to be carried out during traveling, wherein staged level determination as to whether or not to be the state of being capable of switching from automatic driving to manual driving in the prescribed switching segment is performed based on the driver's state detected in the driver monitoring part, for instance, and the vehicle speed for traveling up to the switching segment during automatic driving is reduced in accordance with the determined level, thereby automatically stopping the vehicle at an evacuation area when the time computed in a manual driving recovery time computation part exceeds the time required for traveling up to the switching segment.

The invention as disclosed in the patent document 3 is also such that switching from automatic driving to manual driving is basically to be carried out during traveling, wherein determination as to whether or not the driver is capable of manual driving is performed on this side of the boundary between the automatic driving segment and the manual driving segment, thereby allowing the driver to carry out taking-over of driving after waiting until manual driving becomes enabled, provided that the vehicle is guided for evacuation to the preliminarily reserved evacuation place, when the result of determination is that the driver is incapable of manual driving.

The invention as disclosed in the patent document 4 is also such that switching to manual driving is to be carried out during traveling with automatic driving in principle, although it is stated that the automatic driving segment is set in advance and that the vehicle is stopped as a penalty for a certain period of time at a rest area such as a service area, when the result of determination is that an inadequate situation for switching occurs exceptionally.

The invention as disclosed in the patent document 5 is also such that switching from automatic driving to manual driving is to be carried out during traveling in principle, although it is stated that the vehicle is to be guided with automatic driving directly to an emergency evacuation road, etc., when the driver takes no reaction at the scheduled timing of switching from automatic driving to manual driving.

The invention as disclosed in the patent document 6 is such that switching from automatic driving to manual driving is carried out during traveling so as to allow for switching from automatic driving to manual driving in accordance with the intension of the driver by the processing of setting the recommended switching point in the segment determined that taking-over of driving from automatic driving to manual driving is not difficult, and then displaying the recommended switching point on the map image in a navigation system, etc., for instance.

All the inventions as disclosed in the above patent documents 1 to 6 are based on the principle of switching from automatic driving to manual driving during traveling, wherein the inventions in the patent documents 1 to 5 among the above inventions are such that after continuing traveling with automatic driving to the stopping permitted area such as the service area or the evacuation area, the vehicle is stopped at the stopping permitted area or the evacuation area, when the result of determination is that the driver is in the condition of being not adaptable to manual driving yet in accordance with some kind of situation.

In these inventions, while an awakening state or a fatigue level of the driver is considered to be judged in regards to the state of the driver, it is to be understood that the risk caused by abrupt switching to manual driving during vehicle traveling is not avoidable even when the driver is physically less fatigued and is awakened in the state of being clearly conscious to a certain degree.

Further, because of switching to automatic traveling after grasping the situation of the driver during traveling, no switching is made executable before the result of determination on the situation of the driver is confirmed, and besides, there is possibility of large fluctuations in switching position, so that a system configuration might have to be extremely complicated, when a road structure in the switching segment and/or a peripheral traveling vehicle situation is added to the switching conditions.

Further, in regards to switching from automatic driving to manual driving, an automatic driving system additionally provided with an automatic driving assist means for correction of abnormal operations in automatic driving is considered to be applicable, in which case, however, such system requires complicated control and may not be always fully functioned.

The present invention addresses the problems to be solved in the above prior arts, and is thus to provide a driving mode switching assist system which can safely and reliably carry out switching from an automatic driving mode to a manual driving mode with a comparatively simply system configuration.

### MEANS FOR SOLVING THE PROBLEMS

According to the present invention, a driving mode switching assist system is to assist driving mode switching so as to allow for switching from an automatic driving mode to a manual driving mode safely in driving of a vehicle, and comprises: multiple parking-allowable driving mode switching spaces installed in optional locations allowing for installation of a parking space along a vehicle passage road, the driving mode switching spaces being provided for switching from automatic driving to manual driving; a driving segment configuration means which configures an automatic driving segment to be traveled in the automatic driving mode, on the basis of the position of any driving mode switching space that is selected from the multiple driving mode switching spaces and is to be configured in advance so as to allow for parking of the vehicle with automatic driving; and a travel stop state maintaining means for compulsorily maintaining a vehicle travel stop state for a prescribed stopping time, after the vehicle is guided in the automatic driving mode from the automatic driving segment to the selected driving mode switching space.

The driving mode switching assist system itself of the present invention is not a system that is to carry out switching from the automatic driving mode to the manual driving mode during vehicle traveling, but a system that is based on the assumption that the vehicle shall be stopped after being guided with automatic driving up to the parking-allowable driving mode switching space, in principle.

However, it is to be noted that, aside from this system, a combination with a means for switching from the automatic driving mode to the manual driving mode even during traveling shall be acceptable as needed. Further, when it is difficult to secure a parking position by guiding the vehicle with automatic driving in the vicinity of the driving mode switching space, the vehicle may be also guided with manual driving to a vacant space in the driving mode switching space after being stopped temporarily.

As for the driving mode switching space, a part of a space in the service area on a motorway, for instance, is available as the driving mode switching space.

From the viewpoint of convenience, it is effective for the driving mode switching space to be installed in an exit outside area close to a highway or like motorway exit, that is, in a location close to the outside of the exit.

Further, by distributed installation of the multiple driving mode switching spaces as dedicated driving mode switching spaces in locations along the motorway or other general road allowing for traveling of the vehicle with automatic driving, it is possible to solve the problem of experiencing difficulty in finding an available driving mode switching space because of the absence of any vacant space due to a state of being fully occupied by other vehicles, when needed.

The driving segment configuration means is simple in constitution such as cooperation with the existing navigation system for setting of the driving mode switching space as a passing spot, in addition to the final destination, in the navigation system, for instance.

The travel stop state maintaining means is capable of preventing the vehicle from traveling by sending, to a drive control system of the vehicle, a control signal designating an operation stop, for instance, but is not limited thereto, or alternatively, may also be a means of preventing an engine start operation based on a key or button operation, for instance.

By installation of an awakening state assist means in the driving mode switching space so as to lead an awakening state of the driver to an awakening level appropriate for driving, the driver is allowed to reach an awakening state appropriate for driving, as compared with a case where the passage of time is merely awaited.

While food and drink service and other service providing facilities are usually often available when the driving mode switching space is installed in the service area on the highway, it is preferable that installation of the awakening assist means in the driving mode switching space shall be applied also to cases where any other driving mode switching space is installed in the exit outside area close to the motorway exit and/or where the dedicated driving mode switching space is installed.

Examples of the awakening assist means include a means of providing, from a vending machine or in a shop, coffee, tea, chewing gum, mint-based stimulant or like food and drink presenting an awakening function, a stimulating means (visual, acoustic, physical or effective-point stimulation) presenting an awakening function, an exercise space, a sleeping space and a relaxing space. These types of awakening assist means can be provided singly or in combination of two or more of the above.

In regards to the compulsory stopping time by the travel stop state maintaining means, a fatigue or awakening level of the driver is considered to naturally vary depending on a travel distance to the destination, a travel time taken for traveling to the destination, etc., and accordingly, a stopping time adjusting means shall be preferably provided to adjust the stopping time in accordance with previous setting or a distance of the automatic driving segment or a travel time taken for traveling on the automatic driving segment, etc.

The stopping time adjusting means can be a means for lengthening the stopping time for long-distance traveling, while shortening the stopping time for comparatively short-distance traveling, for instance. The stopping time adjusting means can employ an arithmetic operation processor of a control computer, together with the driving segment configuration means, etc.

By additional installation of both an adaptation state confirming means for confirming the adaptation state of the driver to switching to the manual driving mode before manual driving is started and a stopping time increase/decrease means for increasing/decreasing the stopping time in accordance with the driver adaptation state confirmed by the adaptation state confirming means, the stop state can be maintained for enhancement of the safety, regardless of the passage of an initially estimated stopping time, when the result of determination is that there is some kind of risk.

Further, compulsory release from the travel stop state in the occurrence of an emergency is considered to be indispensable depending on the situations. One of the means therefor can be a travel stop state emergency release means.

However, in this case, for the purpose of preventing the travel stop state emergency release means from being operated without careful consideration, it is preferable that the travel stop state emergency release means shall be configured so as to be operable based on a release condition determination means which determines that prescribed release conditions are satisfied.

Examples of the release conditions include conditions in which the vehicle needs to be started at any cost in accordance with the physical or mental situation of the driver, in which emergency evacuation is required due to the occurrence of a disaster and/or an accident and in which the release from the travel stop state is requested via a third party such as a request for early transfer of the vehicle from an objective point of view, for instance.

The driving mode switching space shall be preferably installed in multiple locations as much as possible, but is limited in installation-allowable location or in installation location itself from the economical point of view, and accordingly, a favorably conditioned driving mode switching space is not always available.

For that reason, it may be possible also to provide a means which classifies the driving mode switching spaces into a plurality of prioritized ranks in accordance with constantly varying situation concerning the convenience of each driving mode switching space, and then selects a driving mode switching space to be used, in accordance with the prioritized rank.

For determination of the situation concerning the convenience, it is considered that geographical or geometrical conditions, conditions concerning a scale or a frequency in use, vacancy conditions or like conditions of each driving mode switching space are assumed to be determination-making factors, for instance, wherein the situation concerning the convenience is to be determined on the assumption that any one of or not less than two of the above conditions or any other conditions shall be the determination-making factors.

As for the driving mode switching space expected to get into the situation of being not immediately available due to the state of being fully occupied by other vehicles, a bypass route toward the driving mode switching space may be provided as a waiting lane which is installed along with the driving mode switching space so as to cope with the situation in which the driving mode switching space is not immediately available.

Namely, the vehicle can be parked after being guided from the waiting lane to the driving mode switching space at the time when the driving mode switching space is made vacant, provided that the vehicle is stopped temporarily after being guided to the waiting lane, when the driving mode switching space is in the situation of being not immediately available.

### EFFECTS OF THE INVENTION

Unlike the inventions that are to carry out switching from automatic driving to manual driving during vehicle traveling as disclosed in the aforementioned patent documents 1 to 4, the driving mode switching assist system of the present invention is configured such that the vehicle is stopped after being guided with automatic driving up to the parking-allowable driving mode switching space in principle and is allowed to travel with manual driving after a certain period of time has elapsed, thereby resulting in allowing switching from the automatic driving mode to the manual driving mode to be carried out safely and reliably with a comparatively simply system configuration.

Further, more enhanced safety in switching from the automatic driving mode to the manual driving mode can be achieved by installing various awakening assist means in the driving mode switching space in order to lead the awakening state of the driver to the awakening level appropriate for driving, and/or by providing the means such as the stopping time adjusting means for adjusting the stopping time in accordance with the distance of the automatic driving segment or the travel time taken for traveling on the automatic driving segment and the adaptation state confirming means for confirming the adaptation state of the driver before traveling with manual driving is started.

In the occurrence of an unexpected emergency situation, speedy evacuation of the vehicle becomes enabled by providing the travel stop state emergency release means for compulsorily releasing the travel stop state in case of emergency.

### BRIEF DESCRIPTION OF THE DRAWINGS

[FIG. 1] FIG. 1 is a view conceptionally showing the relation between an automatic driving segment and a manual driving segment in one embodiment of a driving mode switching assist system of the present invention.
[FIG. 2] FIG. 2 is a flowchart showing the flow of a series of operations when the driving mode switching assist system of the present invention is used.
[FIG. 3] FIG. 3 is a view conceptionally showing the relation between the automatic driving segment and the manual driving segment in another embodiment of the driving mode switching assist system of the present invention.
[FIG. 4] FIG. 4 is a view conceptionally showing the relation between the automatic driving segment and the manual driving segment in a further embodiment of the driving mode switching assist system of the present invention.

### MODE FOR EMBODYING THE INVENTION

Hereinafter will be described the present invention with reference to the attached drawings.

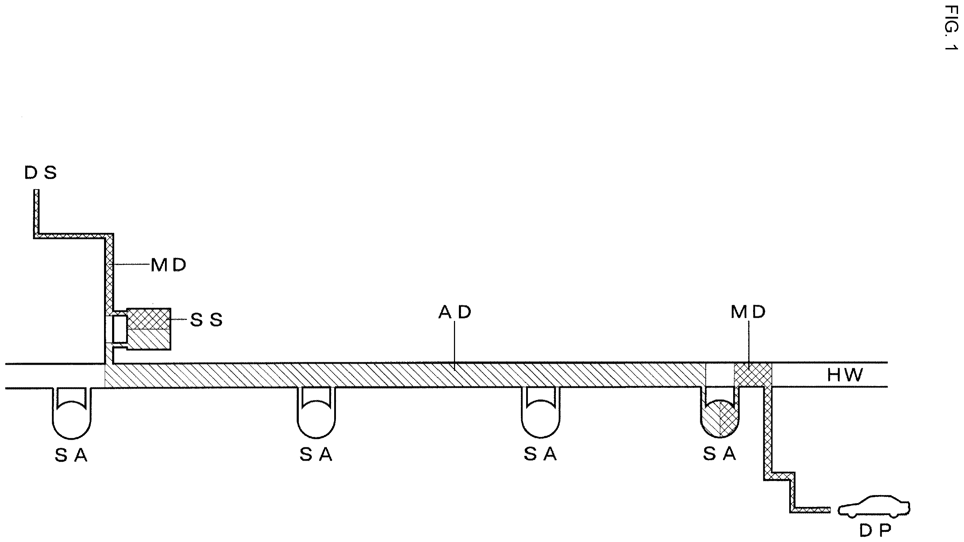

FIG. 1 is a view conceptionally showing the relation between an automatic driving segment AD and a manual driving segment MD in one embodiment of a driving mode switching assist system of the present invention.

This embodiment is based on the premise of traveling to a destination DS in a remote place by way of a highway HW. A range of traveling with manual driving from a departure place DP such as a driver's own house to a first service area SA by way of a route passing through an entrance of the highway HW is assumed to be the manual driving segment MD.

After switching to automatic driving at the service area SA, a vehicle is made to travel on the automatic driving segment AD in an automatic driving mode. Referring to this embodiment, a driving mode switching space SS is configured in a location close to the outside of a highway exit near a destination DS, wherein the vehicle shall be parked with automatic driving in a parking space within the driving mode switching space SS having been configured in advance.

When the driving mode switching space SS is installed within the service area SA, it is possible also to utilize the driving mode switching space SS within the service area SA. Alternatively, when a dedicated driving mode switching space SS is installed in a location along the highway HW or other general road running from the exit of the highway HW, utilization of such dedicated driving mode switching space SS is also possible.

The system of the present invention is configured so as to prevent the parked vehicle from being started for a prescribed stopping time having been estimated in advance by a travel stop state maintaining means.

After the prescribed stopping time has elapsed, the vehicle is released from the compulsory stop state thereof, thereby resulting in allowing for starting of the vehicle after switching to manual driving. For the period of stopping time, a driver is able to take a rest and/or get coffee from a vending machine or in a shop in the driving mode switching space SS and drink it or take light exercise for refreshing.

Because recovering of the awakening state of the driver in the period of stopping time allows the driver to reach a state appropriate for driving, the driver is able to depart for the destination DS from the driving mode switching space SS with manual driving.

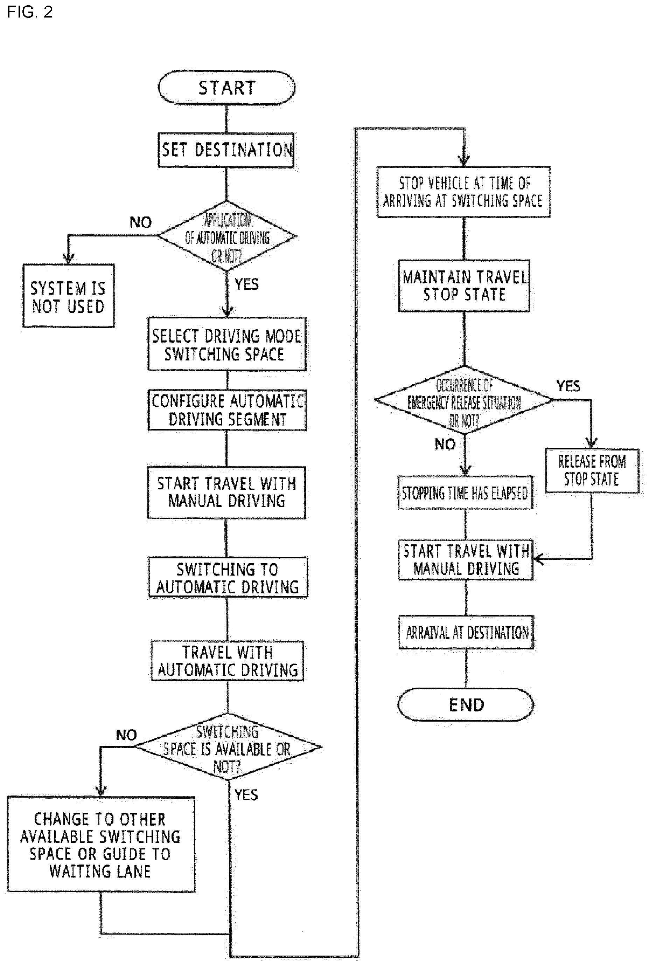

FIG. 2 is a flowchart showing the flow of a series of operations when the driving mode switching assist system of the present invention is used.

First of all, the destination is set using a mobile terminal such as a smartphone cooperated so as to make an onboard input device or the system operable. It is to be noted that when cooperated with a navigation system, navigation system functions are also available.

When no automatic driving is applied to traveling on the route to the destination, the vehicle shall travel with manual driving to the destination without using the system of the present invention.

When automatic driving is applied to traveling on a part of the route to the destination, namely, on a highway segment, for instance, a driving mode switching space specified as a terminal point of the automatic driving segment shall be selected. Usually, the driving mode switching space closest to the destination among the driving mode switching spaces in the segment allowing for traveling with automatic driving should be selected, in which case, however, optional selection can be performed in accordance with the convenience and/or scale of each driving mode switching space. Further, the processing of selecting the driving mode switching space shall result in establishing of the terminal point of the automatic driving segment.

The driving mode switching space may be reserved in advance by using a communication means, in which case, however, it is considered that a system configuration of being capable of making a reservation during traveling or changing the reservation shall be taken, when the destination is so distant that an arrival time will be expected to largely fluctuate. Alternatively, there may be also a form requiring no reservation, when the driving mode switching space has an allowance.

After starting traveling of the vehicle with manual driving upon completion of setting operation, switching to automatic driving can be carried out at an optional switching point. In this case, the service area SA on the highway HW as shown in FIG. 1 can be assumed to be also the switching point, or alternatively, it may be possible also to carry out switching from manual driving to automatic driving during traveling.

Thereafter, the vehicle can be made to travel with automatic driving to the selected driving mode switching space.

When the vehicle is approaching the driving mode switching space, it is confirmed that the space reserved by the communication means or a space requiring no reservation is vacant, in which case, when it is found that the selected driving mode switching space is not available, other available driving mode switching space shall be selected again.

Meanwhile, for the selected driving mode switching space configured so as to have an attached waiting lane allowing for entrance to the driving mode switching space by bypassing, the vehicle may be parked in the driving mode switching space at the time when this driving mode switching space is made vacant, provided that the vehicle is once stopped on the waiting lane until the driving mode switching space becomes vacant.

When stopping the vehicle at the point of time of arriving at the driving mode switching space, the vehicle gets into the state of being incapable of traveling with manual driving for a prescribed stopping time, and thereafter, the travel stop state is maintained. It may be possible also to perform estimation of the length of stopping time by adding a factor such as a travel distance and a travel time to determination-making factors.

Meanwhile, when the vehicle is in the state of being incapable of traveling with manual driving, it may be possible also to newly select other driving mode switching space, thereby allowing for restarting of traveling with automatic driving to the newly selected driving mode switching space, if necessary.

The driver heals one's own fatigue in the period of stopping time in such a way as to get coffee or tea from the vending machine or in the shop installed in the driving mode switching space and drink it or take light exercise for relaxing, and is consequently allowed to reach a usual awakening state appropriate for driving.

However, when the vehicle needs to be started at any cost, or in the occurrence of an emergency release situation such as the need of emergency evacuation due the occurrence of a disaster and/or an accident, the travel stop state shall be released based on objective determination by a travel stop state emergency release means.

After the prescribed stopping time has elapsed, or when an exceptional stop release is done due to the occurrence of the emergency release situation, the driver is able to make the vehicle travel with manual driving to the destination after starting manual driving from the driving mode switching space where the driver's own vehicle is parked.

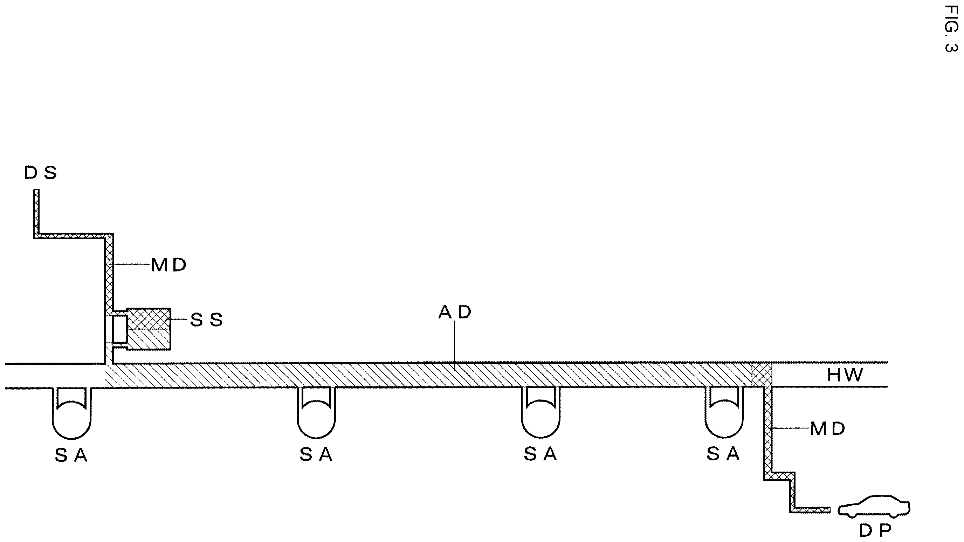

FIG. 3 is a view conceptionally showing the relation between the automatic driving segment and the manual driving segment in another embodiment of the driving mode switching assist system of the present invention.

This embodiment is basically similar to the embodiment shown in FIG. 1, except that the embodiment in FIG. 1 is such that switching to automatic driving is to be carried out at the service area SA on the assumption that the range of traveling with manual driving from the departure place DP such as the driver's own house to the first service area SA by way of the route passing through the entrance of the highway HW shall be the manual driving segment MD, whereas the embodiment shown in FIG. 3 is such that after passing through the entrance of the highway HW with manual driving from the departure place DP such as the driver's own house, switching from manual driving to automatic driving is carried out during traveling on the highway HW, thereby making the vehicle travel with automatic driving directly to the driving mode switching space SS close to the destination DS without stopping by any service area SA.

It is to be noted that other configurations of this embodiment are similar to those of the embodiment shown in FIG. 1.

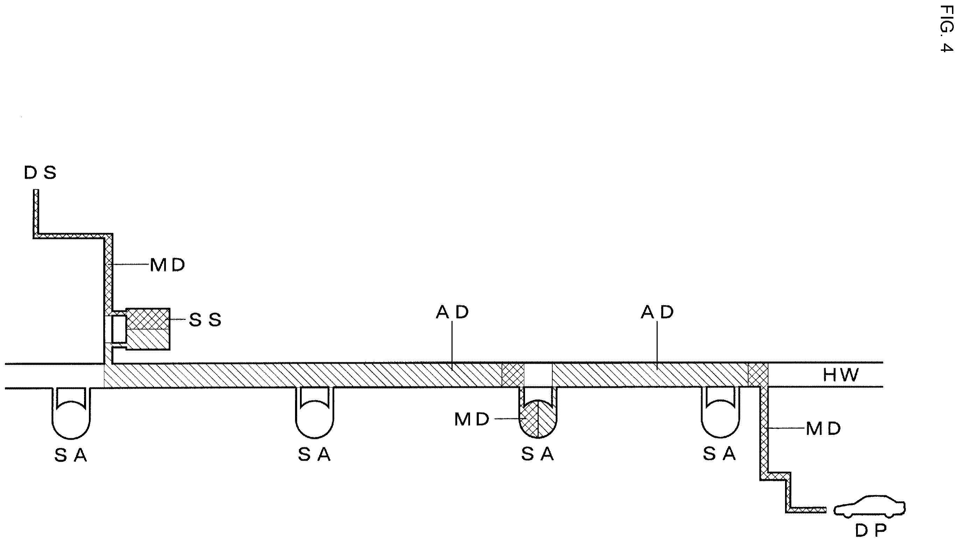

FIG. 4 is a view conceptionally showing the relation between the automatic driving segment and the manual driving segment in a further embodiment of the driving mode switching assist system of the present invention.

This embodiment is based on the assumption that traveling to the destination DS takes so extremely long time that the driver will take a rest for a meal or the like at a service area SA on the route, when driving to the destination DS in a remote place by way of the highway HW.

This embodiment is similar to the embodiment shown in FIG. 3 in that after passing through the entrance of the highway HW with manual driving from the departure place DP, switching from manual driving to automatic driving is carried out during traveling on the highway HW, except that in the embodiment shown in FIG. 4., automatic driving to the service area SA on the route is set in advance, in addition to the destination DS, for allowing the driver to take a rest for a meal or the like at the service area SA on the route.

When departing from the service area SA where the driver's own vehicle is parked, the vehicle starts traveling with manual driving and thereafter, switching to automatic driving is carried out during traveling, or the vehicle exits from the driving mode switching space SS to a main track of the highway HW with automatic driving, provided that the vehicle is capable of being started from the service area SA with automatic driving, thereby allowing the vehicle to travel with automatic driving to the driving mode switching space SS close to the destination DS.

Otherwise, when the need to stop by an unplanned service area SA arises during traveling, any nearby service area SA may be set during traveling so as to allow the driver to stop by the nearby service area.

### EXPLANATION OF REFERENCE NUMERALS

DP ... Departure place, DS ... Destination, HW ... Highway, SA ... Service area, SS ... Driving mode switching space, MD ... Manual driving segment, AD ... Automatic driving segment

## Claims

1. A driving mode switching assist system that is to assist driving mode switching so as to allow for switching from an automatic driving mode to a manual driving mode safely in driving of a vehicle, the driving mode switching assist system comprising:
multiple parking-allowable driving mode switching spaces installed in optional locations allowing for installation of a parking space along a vehicle passage road, the driving mode switching spaces being provided for switching from automatic driving to manual driving;
a driving segment configuration means which configures an automatic driving segment to be traveled in the automatic driving mode, on the basis of the position of any driving mode switching space that is selected from said multiple driving mode switching spaces and is to be configured in advance so as to allow for parking of the vehicle with automatic driving; and
a travel stop state maintaining means for compulsorily maintaining a vehicle travel stop state for a prescribed stopping time, after said vehicle is guided in the automatic driving mode from said automatic driving segment to said selected driving mode switching space.

2. The driving mode switching assist system according to claim 1, wherein said driving mode switching spaces include a driving mode switching space installed in a service area on a motorway.

3. The driving mode switching assist system according to claim 1, wherein said driving mode switching spaces include a driving mode switching space installed in an exit outside area close to a motorway exit.

4. The driving mode switching assist system according to claim 1, wherein said driving mode switching spaces are distributed, as dedicated driving mode switching spaces, in multiple locations along a motorway or other general road.

5. The driving mode switching assist system according to any one of claims 1 to 4, wherein said driving mode switching spaces are each provided with an awakening assist means for leading an awakening state of the driver to an awakening level appropriate for driving.

6. The driving mode switching assist system according to claim 5, wherein said awakening assist means includes any one of or a combination of not less than two of a means for providing food and drink presenting an awakening function, a stimulating means presenting an awakening function, an exercise space, a sleeping space and a relaxing space.

7. The driving mode switching assist system according to any one of claims 1 to 6, wherein a stopping time adjusting means is provided for adjusting said prescribed stopping time in accordance with previous setting or a distance of the automatic driving segment or a travel time taken for traveling on the automatic driving segment.

8. The driving mode switching assist system according to any one of claims 1 to 7, wherein an adaptation state confirming means is provided for confirming an adaptation state of the driver to switching to said manual driving mode, and a stopping time increase/decrease means is also provided for increasing/decreasing said stopping time in accordance with the driver adaptation state confirmed by said adaptation state confirming means.

9. The driving mode switching assist system according to any one of claims 1 to 8, wherein a travel stop state emergency release means is provided for compulsorily releasing said travel stop state in the occurrence of an emergency.

10. The driving mode switching assist system according to claim 9, wherein said travel stop state emergency release means is configured so as to be operable on the basis of a release condition determination means which determines that prescribed release conditions are satisfied.

11. The driving mode switching assist system according to claim 10, wherein one of said release conditions includes any one of a condition concerning a physical or mental situation of the driver, a condition concerning a disaster or accident situation and a condition concerning a release request via a third party.

12. The driving mode switching assist system according to any one of claims 1 to 11, wherein a means is provided for classifying said driving mode switching spaces installed in the multiple locations into a plurality of prioritized ranks in accordance with the constantly varying situation concerning the convenience of each driving mode switching space, and then selecting the driving mode switching space to be used, in accordance with the prioritized rank.

13. The driving mode switching assist system according to claim 12, wherein said situation concerning the convenience is to be determined on the assumption that any one of or not less than two of geographical conditions, geometrical conditions, conditions concerning a scale, conditions concerning a frequency in use and vacancy conditions shall be determination-making factors.

14. The driving mode switching assist system according to any one of claims 1 to 13, wherein a bypass route toward said driving mode switching space is provided as a waiting lane installed along with said driving mode switching space so as to cope with the situation in which said driving mode switching space is not immediately available.
